# EUROPÄISCHE PATENTSCHRIFT

(11) **EP 0 406 645 B1**
(45) Veröffentlichungstag und Bekanntmachung des Hinweises auf die Patenterteilung: **28.04.1993**
(21) Anmeldenummer: 90111910.7
(22) Anmeldetag: 22.06.1990
(51) Int. Cl.: B23K 9/20

(54) **Vorrichtung zur Einzelzuführung von hintereinander zwischen Führungsschienen angeordneten Bolzen und/oder Stiften**
Device for individual guiding bolts and/or pins arranged in series between guiding rails
Dispositif pour le guidage individuel de boulons ou pointes disposés les uns derrière les autres entre des rails de guidage

(30) Priorität: 07.07.1989 DE 3922439
(43) Veröffentlichungstag der Anmeldung: 09.01.1991
(73) Patentinhaber: TRW Nelson Bolzenschweiss-Technik GmbH, D-58285 Gevelsberg (DE)
(72) Erfinder: Aubry, Friedhelm, Dipl.-Ing., D-5620 Velbert 1 (DE)
(74) Vertreter: Schieschke, Klaus, Dipl.-Ing.

(56) Entgegenhaltungen:
- DD-A- 213 621
- DD-A- 260 887
- US-A- 3 380 143

## Beschreibung

Die Erfindung bezieht sich auf eine Vorrichtung zur Einzelzuführung von hintereinander zwischen Führungsschienen angeordneten Bolzen und/oder Stiften zu mindestens einem mit Blasluft beaufschlagten, zu einem Bolzenschweißgerät führenden Bolzenauslaß (siehe DE-A-1 921 025).

Als Stand der Technik ist es hierbei bereits bekannt, als Vorrichtung zur Durchführung von Bolzen einen hin- und hergehenden Schieber einzusetzen (DE-PS 19 21 025, DE-AS 19 30 151, DE-OS 36 24 326, DE-GM 86 07 260). Hierbei sind einzelne Vorrichtungen so gestaltet, daß dem Schieber und den Führungsschienen ein Trommelmagazin vorgeschaltet ist, über welches die vorvereinzelten Bolzen über die Führungsschiene dem Schieber zugeführt werden. Dieser Schieber wird entsprechend gesteuert und veranlaßt, daß jeweils ein einzelner Bolzen über Blasluft durch eine Leitung zu einem Bolzenschweißgerät transportiert wird. Durch die Hin- und Herbewegung des Schiebers ergibt sich eine erhebliche Begrenzung in der Zuführgeschwindigkeit der Einzelbolzen zu dem Bolzenschweißgerät, wobei außerdem nicht die Möglichkeit besteht, beispielsweise zwei verschiedene Bolzenschweißgeräte nacheinander in einem kurzen Zeitraum mit Bolzen zu bestücken.

Zum Stand der Technik zählt weiterhin eine Sortiervorrichtung für Anschweißbolzen, welche wiederum eine gestellfeste Geradführung und einen längs begrenzt verstellbar gelagerten Schieber umfaßt (DE-GM 86 07 260). Als weiterer Stand der Technik ist darüber hinaus eine Vorrichtung zur Zuführung von Bolzen zu einem Bolzenschweißerät bekannt, bei welcher einem Bolzenschweißgerät mehrere Bolzenhalter zugeordnet sind, welche nach einem wählbaren Abrufschema alternativ mit dem Bolzenschweißgerät verbunden werden können (DE-PS 31 08 840). Hier handelt es sich um eine kostenaufwendige Konstruktion, welche zu dem eine genaue Steuereinheit erfordert, um dem wählbaren Arufschema in funktionsrichtiger Weise gerecht zu werden.

Zum Stand der Technik zählt darüber hinaus eine Schraubereinrichtung, bei welcher auf einer umlaufenden Welle drei Zuteilscheiben angeordnet sind (DD-A-213 621). Jede dieser Zuteilscheiben weist hierbei an ihrem Außenumfang Ausnehmungen auf, welche auf verschiedene Schraubenabmessungen abgestellt sind. Die drei Zuteilscheiben fördern nacheinander in entsprechender Abstimmung Schrauben verschiedener Dimensionen zu einem einzigen Zuteilrohr, über welches sie zur Weiterverarbeitung abtransportiert werden.

Bei dieser bekannten Konstruktion müssen die Ausnehmungen in den Zuteilscheiben entsprechend aufeinander abgestimmt werden, um in dem einzigen Zuteilrohr einen unerwünschten Stau zu vermeiden. Diese bekannte Konstruktion ist infolge ihres speziell gestalteten Aufbaus nicht in der Lage, als Vorrichtung zur Zuführung von mit Blasluft beaufschlagten Stiften zumindestens in einem Bolzenschweißgerät eingesetzt zu werden.

Demgegenüber liegt der vorliegenden Erfindung die Aufgabe zugrunde, eine Vorrichtung der eingangs genannten Art so auszubilden, daß auf einfache, jedoch funktionssichere Art, mindestens zwei Bolzenschweißgeräte nacheinander mit Bolzen versehen werden können.

Diese Aufgabe wird bei einer Vorrichtung der eingangs genannten Art dadurch gelöst, daß mindestens zwei zu Bolzenschweißgeräten führende Bolzenauslässe vorgesehen sind, daß zwischen den Bolzenauslässen und den Führungsschienen ein Rotor mit mindestens zwei Aufnahmeschlitzen für jeweils einen Bolzen angeordnet ist und daß der Rotor um seine Drehachse hin- und her drehbar ist. Es ergibt sich damit der Vorteil, daß durch Einsatz eines wechselweise drehenden Rotors in kurzen Abständen nacheinander zwei Bolzenschweißgeräte mit Bolzen bestückt werden können; während der Rotor dem einen Bolzenschweißgerät den entsprechenden Bolzen vorlegt, wird inzwischen der zweite Bolzenaufnahmeschlitz über die Führungsschiene mit einem neuen Bolzen bestückt, wobei dieser dann dem zweiten Bolzenschweißgerät zugeführt werden kann. Die beiden, im Rotor angeordneten Aufnahmeschlitze gewährleisten damit eine gleichzeitige Aufnahme und Abgabe von zwei Bolzen.

Bezüglich der Gestaltung des Rotors besteht die Möglichkeit, diesen nach einem weiteren Merkmal der Erfindung als Nocke auszubilden, wobei an seinem Außenumfang zwei Aufnahmeschlitze angeordnet sind. Alternativ ist auch die Möglichkeit gegeben, daß der Rotor malteserkreuzförmig ausgebildet ist und an seinem Außenumfang vier Aufnahmeschlitze aufweist. Statt der Malteserform kann der Rotor auch Zylinderform aufweisen und wiederum mit vier am Außenumfang angeordneten Aufnahmeschlitzen versehen sein. Hierbei sind jeweils zwei Aufnahmeschlitze im Einsatz, wobei durch einfaches Umstecken des Rotors um 180° zwei weitere Aufnahmeschlitze zum Einsatz kommen können, wenn die vorgenannten ersten Aufnahmeschlitze ausgenutzt sind und keine genaue Dimensionierung mehr aufweisen.

Nach einem weiteren Merkmal der Erfindung kann der Rotor in einem Gehäuse angeordnet und unterseitig mit einem Schwenkantrieb verbunden sein. Hierbei kann das Gehäuse an gegenüberliegenden Seiten jeweils einen Anschluß für Blasluft und auf der Oberseite jeweils einen mit den Blasluftanschlüssen verbundenen Bolzenauslaß aufweisen, so daß eine kompakte, raumsparende Bauform ergibt.

Um das vorgenannte Umstecken des Rotors bei Verschleiß von Aufnahmeschlitzen leicht durchführen zu können, kann in weiterer Ausgestaltung der Erfindung zwischen der Rotordrehachse und einer Achse des beispielsweise pneumatisch ausgebildeten Schwenkantriebes eine Steckkupplung z.B. in Form einer Keilverbindung angeordnet sein. Hierzu kann der Rotor umsteckbar auf dieser Achse des Schwenkantriebes befestigt sein und Montageöffnungen zum Abziehen bzw. Wenden aufweisen. Diese Montageöffnungen können beispielsweise jeweils als Gewindesackloch ausgebildet werden.

Bezüglich der Gestaltung der Aufnahmeöffnungen besteht die Möglichkeit, in weiterer Ausgestaltung der Erfindung eine gleiche oder eine unterschiedliche Dimensionierung der Aufnahmeschlitze vorzusehen. Bei unterschiedlicher Dimensionierung der Aufnahmeschlitze besteht damit die Möglichkeit, Bolzen verschiedenster Konfigurationen mit demselben Rotor von den Führungsschienen zu den Bolzenauslässen zu befördern. Hierbei können die Aufnahmeschlitze beispielsweise durchgehend ausgebildet sein.

Um verschiedene Höhen bzw. Längen der Bolzen durch den erfindungsgemäßen Rotor transportieren zu können, besteht weiterhin nach einem anderen Merkmal der Erfindung die Möglichkeit, im Aufnahmeschlitz einen arretierbaren Stopfen einzusetzen, durch welchen die Tiefe des Aufnahmeschlitzes in Übereinstimmung mit dem zu transportierenden Bolzen definiert werden kann.

Alternativ besteht auch die Möglichkeit, daß die Aufnahmeschlitze jeweils sacklochartig ausgebildet sind, so daß der Einsatz der vorgenannten arretierbaren Stopfen entfallen kann. Die Erfindung wird nachfolgend anhand von in der Zeichnung dargestellten Ausführungsbeispielen näher beschrieben. In der Zeichnung zeigen:
- Fig. 1: eine Draufsicht auf eine Ausführungsform der Vorrichtung zur Zuführung von Bolzen, teils geschnitten;
- Fig. 2: einen Querschnitt durch die Ausführungsform der erfindungsgemäßen Vorrichtung nach Fig. 1;
- Fig. 3 und 4: zwei weitere Ausführungsformen der Gestaltung des Rotors in Draufsicht, jeweils teilweise geschnitten;
- Fig. 5: einen Schnitt nach der Linie V-V einer Gestaltung eines Rotors nach Fig. 6;
- Fig. 6: eine Draufsicht auf eine Ausführungsform des Rotors;
- Fig. 7: eine Ansicht in Richtung X einer in Fig. 8 dargestellten weiteren Ausführungsform des Rotors;
- Fig. 8: einen Schnitt durch einen Rotor mit acht verschieden dimensionierten Aufnahmeschlitzen;
- Fig. 9: eine Ansicht in Richtung Y der Ausführungsform nach Fig. 8;
- Fig. 10: eine Draufsicht auf eine andere Ausführungsmöglichkeit des Rotors;
- Fig. 11: eine Seitenansicht des Rotors nach Fig. 10;
- Fig. 12: eine Seitenansicht und Draufsicht auf einen in Fig. 11 in einen Aufnahmeschlitz eingesetzten Stopfen.

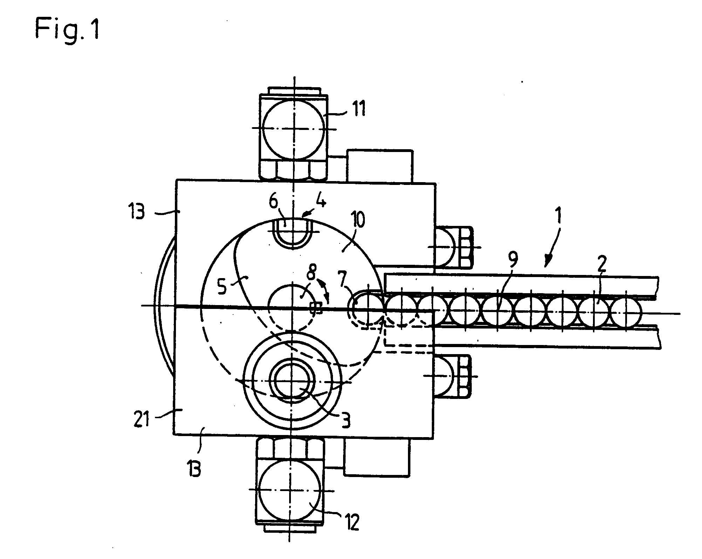

Gemäß Fig. 1 sind Führungsschienen 1 vorgesehen, zwischen welchen hintereinander angeordnete Bolzen 2 von einem nicht näher dargestellten Magazin in eine Vorrichtung zur Einzelzuführung dieser Bolzen 2 zu zwei Bolzenschweißgeräten angeordnet sind. Diese Vorrichtung zur Einzelzuführung der Bolzen besteht im wesentlichen aus einem nockenförmig ausgebildeten Rotor 5, welcher um eine Drehachse 8 in Pfeilrichtung hin und her drehbar ist. Die Drehachse 8 des Rotors und die Bolzenlängsachsen 9 liegen hierbei parallel.

Der nockenförmig ausgebildete Rotor 5 weist an seinem Außenumfang zwei Aufnahmeschlitze 6 und 7 auf, welche im Winkel von 90° zueinander liegen. Der Rotor 5 ist in einem Gehäuse 13 angeordnet, welches an gegenüberliegenden Seiten jeweils einen Anschluß 11 bzw. 12 für Blasluft und auf der Oberseite jeweils einen mit den Blasluftanschlüssen 11, 12 verbundenen Bolzenauslaß 3 bzw. 4 aufweist. Da Fig. 1 eine Schnittdarstellung ist, ist hier lediglich der Bolzenauslaß 3 erkennbar.

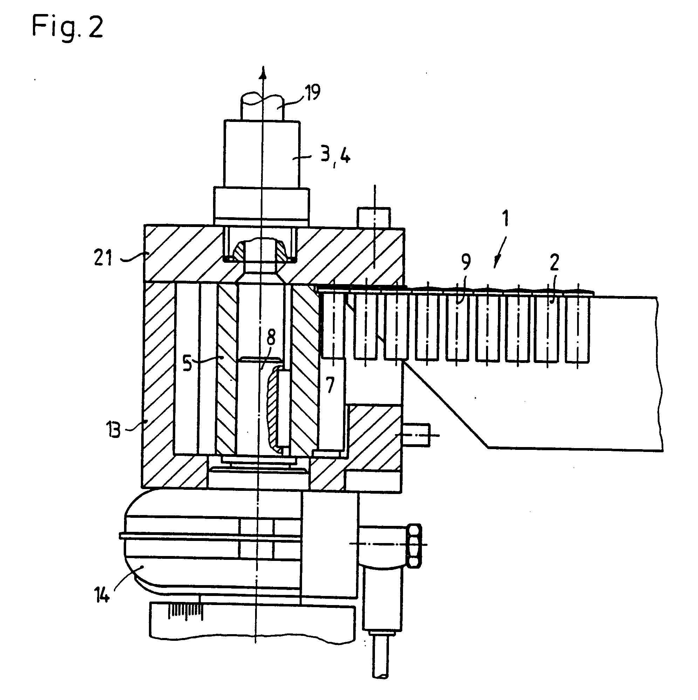

Nach Fig. 2 ist die Rotordrehachse 8 über eine Keilverbindung mit einer Antriebsachse eines vorzugsweise pneumatisch ausgebildeten Schwenkantriebs 14 verbunden. Durch diesen Schwenkantrieb wird bewirkt, daß der Rotor 5, wie vorstehend ausgeführt, in Pfeilrichtung hin und her schwenkt. Dabei wird in der in Fig. 1 dargestellten Position der Aufnahmeschlitz 7 mit einem neuen Bolzen bestückt, während der Aufnahmeschlitz 6 deckungsgleich mit dem Bolzenauslaß 4 liegt und hier mit Hilfe der durch den Anschluß 11 eintretenden Blasluft nach Fig. 2 der Bolzen über die Leitung 9 zu dem entsprechenden Bolzenschweißgerät transportiert wird. Nunmehr läßt sich der Rotor 5 im Uhrzeigersinn um 90° drehen, so daß der leere Aufnahmeschlitz 6 deckungsgleich mit den Bolzen zwischen den Führungsschienen 1 liegt und der mit einem neuen Bolzen 2 bestückte Aufnahmeschlitz 7 sich unterhalb des Bolzenauslasses 3 befindet, so daß über Blasluft dieser Bolzen im vorgenannten Sinne zu einem anderen Bolzenschweißgerät über eine entsprechende Leitung transportiert werden kann.

Aus Fig. 2 ist ersichtlich, daß sich die betreffenden Aufnahmeschlitze 6 bzw. 7 am Außenumfang des nockenartig ausgebildeten Rotors über die gesamte Länge erstrecken. Damit können vorteilhafterweise sowohl kurze, als auch lange Bolzen einwandfrei den jeweiligen Bolzenschweißgeräten zugeführt werden.

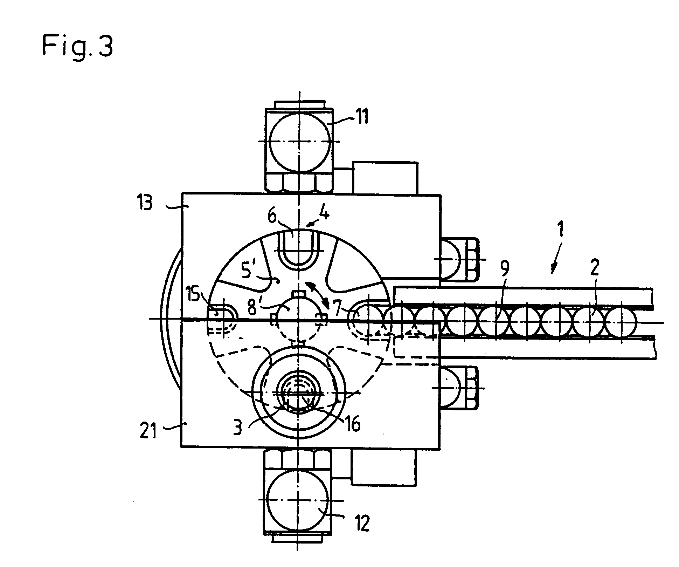

Nach Fig. 3 besteht die Möglichkeit, den Rotor 5'' in Form eines Malteserkreuzes auszubilden, wobei am Außenumfang vier Aufnahmeschlitze 6, 7, 15 und 16 angeordnet sein können. Bei dieser Ausführungsform ist die Rotordrehachse 8' als Vielprofilwelle ausgebildet. Ergibt sich bezüglich der Aufnahmeschlitze 6 und 7 ein Verschließ durch Weitertransport der entsprechenden Bolzen 2 über einen längeren Zeitraum, so läßt sich bei dieser Bauform der Rotor 5' um 180° auf der Rotordrehachse 8' umstecken, so daß nunmehr die Aufnahmeschlitze 15 und 16 die Funktion der vorgenannten Aufnahmeschlitze 6 und 7 erfüllen. Damit läßt sich vorteilhafterweise bei dieser Bauform der Rotor 5 über einen längeren Zeitraum verwenden, wobei es keiner großen Mühe bedarf, im Falle eines Verschleißes durch einfaches Umstecken den Rotor 5' wieder funktionsfähig zu machen.

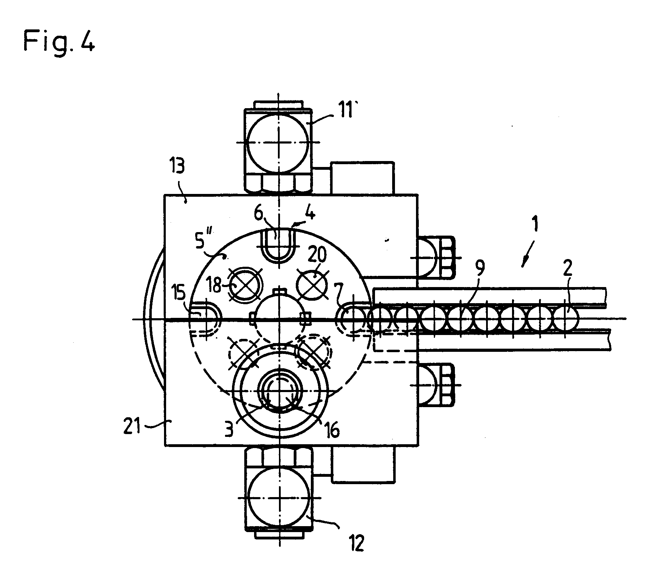

Bei der Ausführungsform nach Fig. 4 ist der Rotor 5' als zylindrisches Element ausgebildet und weist an seinem Außenumfang, jeweils um 90° versetzt, wiederum die vier Aufnahmeschlitze 6, 7, 15 und 16 auf. Auch hier ist die Rotorwelle 8' wiederum als Vielprofilwelle ausgebildet, so daß, analog der Bauform nach Fig. 3, wiederum durch einfaches Umstecken des Rotors 5'' statt der Aufnahmeschlitze 6 und 7 nunmehr die Aufnahmeschlitze 15 und 16 zur Durchführung ihrer entsprechenden Transportfunktion vorliegen.

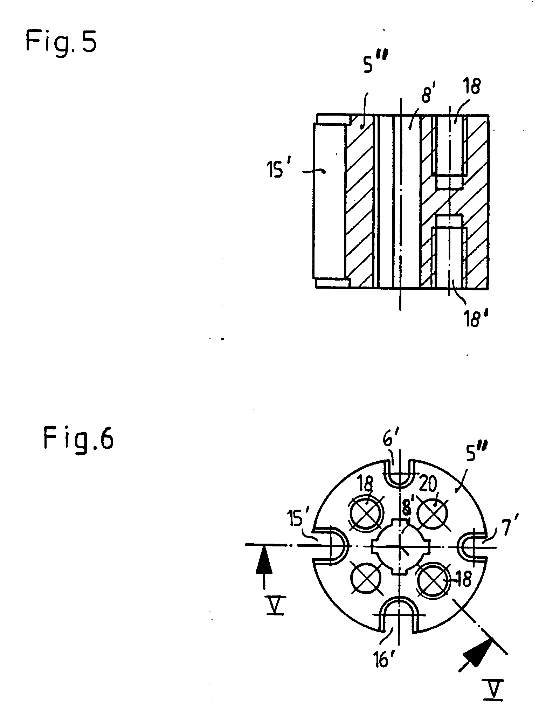

Fig. 5 und 6 stellen einen Rotor 5'' analog der Bauform nach Fig. 4 im Schnitt V bzw. in Draufsicht dar. Bei dieser Bauform wurden die Aufnahmeschlitze 6', 7', 15' und 16' so ausgebildet, daß sie entsprechend der Aufnahme für verschiedene Bolzendurchmesser gestaltet sind. Wiederum erstrecken sich die Aufnahmeschlitze entsprechend Fig. 5 über die ganze Länge des Rotors 5''. Bei dieser Bauform besteht die Möglichkeit, vier Bolzen unterschiedlichen Durchmessers zu transportieren, wobei, analog der Bauform nach Fig. 1 bis 4 zunächst zwei Bolzen verschiedenen Durchmessers durch die Aufnahmeschlitze 6' und 7' transportiert werden und durch Umstecken analog der vorbeschriebenen Bauformen auf der Rotordrehachse 8' bei wiederum anderen Bolzendurchmessern die Aufnahmeschlitze 15' und 16' zur Wirkung kommen und hiermit Bolzen wiederum anderer Abmessungen transportieren.

Nach Fig. 5 und 6 weisen bei dieser Ausführungsform des Rotors 5'' die beiden Aufnahmeschlitze 6' und 7' die gleichen Abmessungen auf, ebenso wie die Ausnehmungen 15' und 16'. Damit lassen sich durch einfaches Umstecken zwei Bolzentypen verschiedenen Durchmessers transportieren.

Es besteht jedoch auch die Möglichkeit, wie vorstehend ausgeführt, daß alle Aufnahmeschlitze 6', 7', 15' und 16' unterschiedliche Dimensionen aufweisen, so daß die Bolzen, welche über die Führungsschienen 1 transportiert werden, entsprechend vorsortiert bezüglich ihren Abmessungen in die einzelnen Aufnahmeschlitze 6' bzw. 7' abgegeben werden.

Um das Umstecken des Rotors 5'' einfach zu gestalten, sind Montageöffnungen 18 bzw. 18' vorgesehen, welche jeweils als Gewindesackloch ausgebildet sind. Durch Einschrauben einer Schraube kann damit die Bedienungsperson den Rotor 5'' auf der Rotordrehachse 8' herausheben und um 180° versetzen, so daß dann nicht mehr die Aufnahmeschlitze 6' und 7' sondern die Aufnahmeschlsitze 15' und 16' im Bereich der Bolzenauslässe 3 bzw. 4 und der Führungsschienen 1 liegen. Neben diesen Montageöffnungen können weitere Durchgangsöffnungen 20 vorgesehen sein.

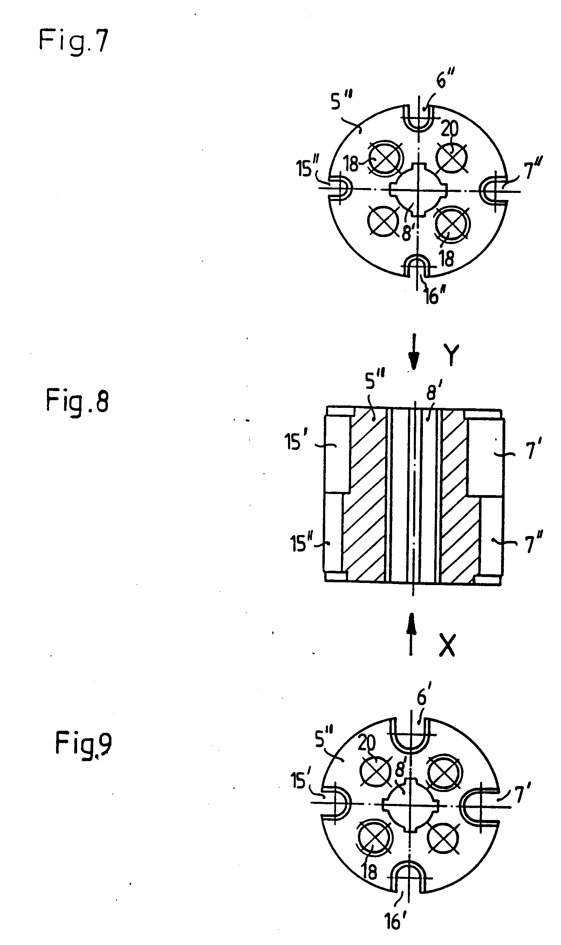

Fig. 7, 8 und 9 zeigen eine andere Ausführungsform des Rotors 5''. Hier ist aus Fig. 8 und 9 ersichtlich, daß der Rotor 5'' im oberen Bereich verschieden dimensionierte Aufnahmeschlitze 6', 7', 15' und 16' aufweist und im unteren Bereich ( Fig.7) wiederum verschieden dimensionierte Aufnahmeschlitze 6'', 7'' bzw. 15'' und 16''. Damit lassen sich bis zu acht verschiedene Bolzendurchmesser mit Hilfe eines einzigen Rotors 5'' von den Führungsschienen 1 entnehmen und zu den entsprechenden Bolzenauslässen 3 bzw. 4 analog der Bauform nach Fig. 1 und 2 transportieren. Wiederum weist der Rotor 5'' eine profilierte Rotordrehachse 8' sowie Montageöffnungen 18 in Form von Gewindesacklöchern auf.

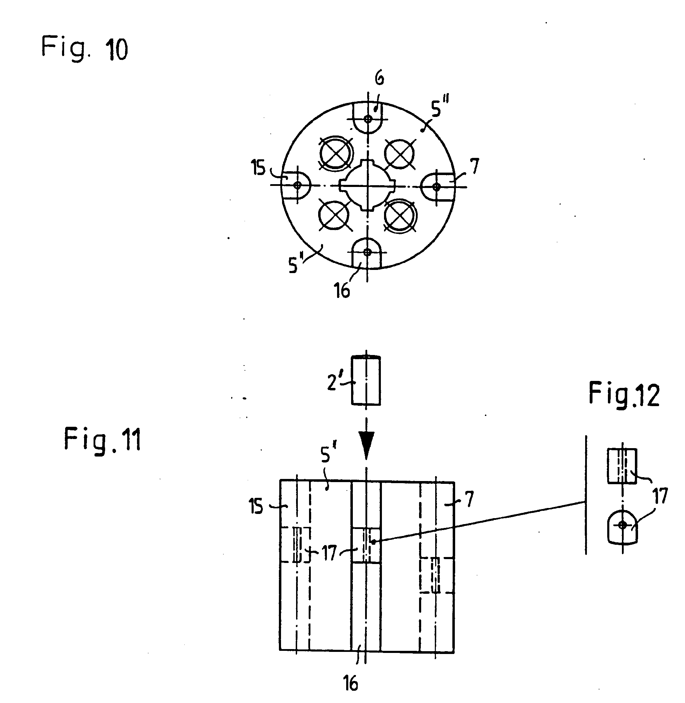

Bei der Ausführungsform des Rotors 5'' nach Fig. 10 und 11 sind die Aufnahmeschlitze 6 und 7 bzw. 15 und 16 wiederum als durchgehender Bereich analog der Bauform nach Fig. 1 und 2 ausgeführt. Um nun z.B. Stifte 2' verschiedener Länge mit einem einzigen Rotor 5'' zu transportieren, besteht die Möglichkeit, einen entsprechend gestalteten Stopfen 17 nach Fig. 12 innerhalb der Aufnahmeschlitze 6, 7 bzw. 15, 16 arretiert anzubringen, und zwar entsprechend der Länge des zu transportierenden Stiftes.Da die Stopfen höhenverstellbar ausgebildet sind, besteht hierdurch auf einfache Weise die Möglichkeit, Stifte unterschiedlicher Länge zu transportieren, wobei diese Stifte 2' analog Fig. 11 ohne Flansch ausgebildet sind.

Hierbei ist aus Fig. 11 ersichtlich, daß die Stopfen 17 im Bereich der Schlitze 15 und 16 in einer anderen Höhe in diesen Schlitzen angeordnet sind, als der Stopfen 17 in dem Aufnahmeschlitz 7. Damit können in den Aufnahmeschlitzen 6 und 7 längere Stifte transportiert werden, wohingegen wiederum durch einfaches Umstecken die Möglichkeit besteht, durch Einsatz der Aufnahmeschlitze 15 und 16 kürzere Stifte von den Führungsschienen zu den Bolzenschweißgeräten zu transportieren.

Die jeweiligen Rotoren 5 bzw. 5' bzw. 5'' sind so in dem Gehäuse 13 angeordnet, daß durch den Einsatz von Blasluft über die Blasluftanschlüsse 11 und 12 ein weitestgehender Energieverlust vermieden wird und damit die in dem Bereich der Bolzenauslässe 3 bzw. 4 liegenden Bolzen und/oder Stifte auf wirtschaftliche Weise zu den jeweiligen Bolzenschweißgeräten transportiert werden.

Dieses Gehäuse 13 ist gemäß den Fig. 1 bis 4 durch einen Deckel 21 im oberen Bereich abgedeckt, wobei dieser Deckel 21 die Bolzenauslässe 3 und 4 trägt.

Durch die besondere Gestaltung des Rotors, welcher jeweils mit mindestens zwei Aufnahmeschlitzen versehen ist, ergibt sich eine sehr wirksame Beförderung der jeweiligen Bolzen 2 bzw. Stifte 2' über die entsprechenden Aufnahmeschlitze in die Bolzenauslässe 3 bzw. 4.

## Patentansprüche

1. Vorrichtung zur Einzelzuführung von hintereinander zwischen Führungsschienen (1) angeordneten Bolzen (2, 2') und/oder Stiften zu mindestens einem mit Blasluft beaufschlagten, zu einem Bolzenschweißgerät führenden Bolzenauslaß (3, 4), dadurch gekennzeichnet,
daß mindestens zwei zu Bolzenschweißgeräten führende Bolzenauslässe (3, 4) vorgesehen sind,
daß zwischen den Bolzenauslässen (3, 4) und den Führungsschienen (1) ein Rotor (5, 5', 5'') mit mindestens zwei Aufnahmeschlitzen (6, 7; 15, 16) für jeweils einen Bolzen (2, 2') angeordnet ist und
daß der Rotor (5, 5', 5'') um seine Drehachse (8, 8') hin und her drehbar ist.

2. Vorrichtung nach Anspruch 1, dadurch gekennzeichnet, daß der Rotor (5) nockenförmig ausgebildet ist und an seinem Außenumfang zwei Aufnahmeschlitze (6, 7) aufweist.

3. Vorrichtung nach Anspruch 1 dadurch gekennzeichnet, daß der Rotor (5') malteserkreuzartig ausgebildet ist und an seinem Außenumfang vier Aufnahmeschlitze (6, 7; 15, 16) aufweist (Fig. 3).

4. Vorrichtung nach Anspruch 1, dadurch gekennzeichnet, daß der Rotor (5'') Zylinderform aufweist mit vier an Außennumfang angeordneten Aufnahmeschlitzen (6, 7; 15, 16) (Fig. 4).

5. Vorrichtung nach einem der vorhergehenden Ansprüche, dadurch gekennzeichnet, daß der Rotor (5, 5', 5'') in einem Gehäuse (13) angeordnet und unterseitig mit einem Schwenkantrieb (14) verbunden ist.

6. Vorrichtung nach Anspruch 5, dadurch gekennzeichnet, daß das Gehäuse (13) an gegenüberliegenden Seiten jeweils einen Anschluß (11, 12) für Blasluft und auf der Oberseite jeweils einen mit dem Blasluftanschlüssen (11, 12) verbundenen Bolzenauslaß (3, 4) aufweist.

7. Vorrichtung nach Anspruch 5, gekennzeichnet durch eine Keilverbindung zwischen der Rotordrehachse (8') und einer Achse des Schwenkantriebes (14).

8. Vorrichtung nach einem der vorhergehenden Ansprüche 1 bis 7, gekennzeichnet durch unterschiedliche Dimensionierung der Aufnahmeschlitze (6', 7', 15', 16'; 6'', 7'', 15'', 16'').

9. Vorrichtung nach Anspruch 1, gekennzeichnet durch jeweils einen im durchgehenden Aufnahmeschlitz (6, 7, 15, 16) arretierbaren Stopfen (17).

10. Vorrichtung nach einem der Ansprüche 1 bis 9, dadurch gekennzeichnet, daß die Aufnahmeschlitze jeweils sacklochartig ausgebildet sind.

11. Vorrichtung nach einem der vorhergehenden Ansprüche, dadurch gekennzeichnet, daß der Rotor (5'') umsteckbar auf der Achse des Schwenkantriebes (14) befestigt ist.

12. Vorrichtung nach Anspruch 11, dadurch gekennzeichnet, daß der Rotor (5'') Montageöffnungen (18) zum Abziehen und Wenden aufweist.

13. Vorrichtung nach Anspruch 12, dadurch gekennzeichnet, daß die Montageöffnungen (18) jeweils als Gewindesackloch ausgebildet sind.

14. Vorrichtung nach Anspruch 7 und 11, dadurch gekennzeichnet, daß die Drehachse (8') des Rotors (5'') als durchgehende Profilöffnung ausgebildet ist.

15. Vorrichtung nach Anspruch 4, 13 und 14, dadurch gekennzeichnet, daß in dem zylinderartig ausgebildeten Rotor (5'') zwischen zwei Aufnahmeschlitzen (6, 7, 15, 16) eine Montageöffnung (18) angeordnet ist.

## Claims

1. Device for individually feeding bolts (2, 2') and/or pins arranged in series between guiding rails (1) to at least one bolt outlet (3, 4) subjected to blowing air and leading to a bolt welding appliance, characterised in that at least two bolt outlets (3, 4) leading to bolt welding appliances are provided, in that a rotor (5, 5', 5'') having at least two receiving slots (6, 7; 15, 16) for in each case one bolt (2, 2') is arranged between the bolt outlets (3, 4) and the guiding rails (1) and in that the rotor (5, 5', 5'') is rotatable back and forth about its rotational spindle (8, 8').

2. Device according to Claim 1, characterised in that the rotor (5) is of a cam-shaped design and has two receiving slots (6, 7) on its outer periphery.

3. Device according to Claim 1, characterised in that the rotor (5') is of a Maltese cross-like design and has four receiving slots (6, 7; 15, 16) on its outer periphery (Fig. 3).

4. Device according to Claim 1, characterised in that the rotor (5'') has the shape of a cylinder with four receiving slots (6, 7; 15, 16) arranged on the outer periphery (Fig. 4).

5. Device according to one of the preceding claims, characterised in that the rotor (5, 5', 5'') is arranged in a housing (13) and is connected on the underside to a pivot drive (14).

6. Device according to Claim 5, characterised in that the housing (13) has on opposite sides in each case a connection (11, 12) for blowing air and on the upper side in each case a bolt outlet (3, 4) connected to the blowing-air connections (11, 12).

7. Device according to Claim 5, characterised by a keying between the rotor rotational spindle (8') and a spindle of the pivot drive (14).

8. Device according to one of the preceding Claims 1 to 7, characterised by different dimensioning of the receiving slots (6', 7', 15', 16'; 6'', 7'', 15'', 16'').

9. Device according to Claim 1, characterised by in each case a plug (17) which can be locked in the continuous receiving slot (6, 7, 15, 16).

10. Device according to one of Claims 1 to 9, characterised in that the receiving slots are in each case of a blindhole-like design.

11. Device according to one of the preceding claims, characterised in that the rotor (5'') is fastened interchangeably on the spindle of the pivot drive (14).

12. Device according to Claim 11, characterised in that the rotor (5'') has mounting openings (18) for withdrawing and turning.

13. Device according to Claim 12, characterised in that the mounting openings (18) are in each case designed as a threaded blindhole.

14. Device according to Claims 7 and 11, characterised in that the rotational spindle (8') of the rotor (5'') is designed as a continuous profiled opening.

15. Device according to Claims 4, 13 and 14, characterised in that a mounting opening (18) is arranged in the rotor (5'') of cylinder-like design between two receiving slots (6, 7, 15, 16).

## Revendications

1. Dispositif pour le guidage individuel de boulons (2, 2') et/ou de goujons disposés les uns derrière les autres entre des rails de guidage (1) vers au moins une évacuation de boulons (3, 4) alimentée en air de soufflage et menant à un dispositif de soudage de boulons,
caractérisé en ce qu'il est prévu au moins deux évacuations de boulons (3, 4) menant à des dispositifs de soudure de boulons,
en ce qu'entre les évacuations de boulons (3, 4) et les rails de guidage (1) est agencé un rotor (5, 5', 5'') avec au moins deux fentes de réception (6, 7 ; 15, 16) pour chaque fois un boulon (2, 2') et
en ce que le rotor (5, 5', 5'') est rotatif en un mouvement de va-et-vient autour de son axe de rotation (8, 8').

2. Dispositif selon la revendication 1, caractérisé en ce que le rotor (5) est conçu en forme de came et présente sur sa périphérie extérieure deux fentes de réception (6, 7).

3. Dispositif selon la revendication 1, caractérisé en ce que le rotor (5') est conçu sous forme d'une croix de malte et comporte quatre fentes de réception (6, 7 ; 15, 16) sur sa périphérie extérieure.

4. Dispositif selon la revendication 1, caractérisé en ce que le rotor (5'') est de forme cylindrique et comporte quatre fentes de réception (6, 7 ; 15, 16) (figure 4) agencées sur sa périphérie extérieure.

5. Dispositif selon l'une des revendications précédentes, caractérisé en ce que le rotor (5, 5', 5'') est agencé dans un logement (13) et en ce qu'il est raccordé sur le côté inférieur avec un système d'entraînement basculant (15).

6. Dispositif selon la revendication 5, caractérisé en ce que le logement (13) présente sur ses côtés opposés respectivement un raccord (11, 12) pour l'air de soufflage et sur le côté supérieur respectivement une évacuation de boulons (3, 4) reliée aux raccords d'air de soufflage (11, 12).

7. Dispositif selon la revendication 5, caractérisé par un clavetage entre l'axe de rotation du rotor (8') et un axe du système d'entraînement basculant (14).

8. Dispositif selon l'une des revendications précédentes 1 à 7, caractérisé par différents dimensionnements des fentes de réception (6', 7', 15', 16' ; 6'', 7'', 15'', 16 '').

9. Dispositif selon la revendication 1, caractérisé par respectivement un bouchon de blocage (17) dans la fente de réception traversante (6, 7, 15, 16).

10. Dispositif selon l'une des revendications 1 à 9, caractérisé en ce que les fentes de réception sont respectivement conçues sous la forme de trous borgnes.

11. Dispositif selon l'une des revendications précédentes, caractérisé en ce que le rotor (5'') est fixé de façon réversible sur l'axe du système d'entraînement basculant (15).

12. Dispositif selon la revendication 11, caractérisé en ce que le rotor (5'') présente des ouvertures de montage (18) pour l'extraction et le retournement.

13. Dispositif selon la revendication 12, caractérisé en ce que les ouvertures de montage (18) sont respectivement conçues sous forme de trous borgnes filetés.

14. Dispositif selon les revendications 7 et 11, caractérisé en ce que l'axe rotatif (8') du rotor (5) est conçu sous forme d'ouverture profilée traversante.

15. Dispositif selon les revendications 4, 13 et 14, caractérisé en ce que dans le rotor (5'') conçu de façon cylindrique, est agencée une ouverture de montage (18) entre deux fentes de réception (6, 7, 15, 16).
